(19) Europäisches Patentamt
European Patent Office
Office européen des brevets

(11) Numéro de publication: 0 237 435 B1

(12) # FASCICULE DE BREVET EUROPEEN

(45) Date de publication du fascicule du brevet: 31.01.90

(51) Int. Cl.⁴: C07C 233/01, C08F 20/58

(21) Numéro de dépôt: 87400534.1

(22) Date de dépôt: 11.03.87

(54) **Nouveaux dérivés substitués du N-éthyl(méth)acrylamide et procédé pour leur préparation.**

(30) Priorité: 13.03.86 FR 8603587

(43) Date de publication de la demande: 16.09.87 Bulletin 87/38

(45) Mention de la délivrance du brevet: 31.01.90 Bulletin 90/5

(84) Etats contractants désignés: AT BE CH DE ES FR GB IT LI NL

(56) Documents cités:
EP-A- 0 002 767
US-A- 4 508 594
US-A- 4 521 563

(73) Titulaire: SOCIETE FRANCAISE HOECHST Société anonyme dite:, 3, avenue du Général de Gaulle, F-92800 Puteaux(FR)

(72) Inventeur: Chastrette, Francine, 22 chemin de la Combe Martin, F-69300 Caluire(FR)
Inventeur: Stambouli, Abdelhamid, 3 rue Gervais Bussière, F-69600 Villeurbanne(FR)

(74) Mandataire: Rinuy, Santarelli, 14, avenue de la Grande Armée, F-75017 Paris(FR)

EP 0 237 435 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne de nouveaux dérivés substitués du N-éthyl(méth)acrylamide et un procédé pour leur préparation.

La présente invention a pour object les produits de formule générale (I) :

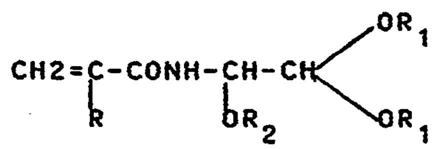

(I)

dans laquelle R représente un atome d'hydrogène ou un radical méthyle, $R_1$ représente un groupement alkyle en $C_1$-$C_8$ et $R_2$ représente un atome d'hydrogène ou un groupement alkyle en $C_1$-$C_8$. L'invention a plus particulièrement pour objet les produits tels que définis ci-dessus, caractérisés en ce que dans la formule (I), R représente un atome d'hydrogène, $R_1$ un groupement alkyle en $C_1$-$C_4$ et $R_2$ un atome d'hydrogène ou un groupement alkyle en $C_1$-$C_4$. Parmi ces produits, on peut citer plus particulièrement :

N-(triméthoxy-1,2,2 éthyl) propène-2 amide,
N-(triéthoxy-1,2,2 éthyl) propène-2 amide,
N-(diméthoxy-2,2 hydroxy-1 éthyl) propène-2 amide,
N-(diéthoxy-2,2 hydroxy-1 éthyl) propène-2 amide.

On connait des dérivés substitués sur l'atome d'azote du (méth)acrylamide présentant soit une fonction acétalique (demande de brevet européen N° 0.002.767 et brevet des Etats-Unis d'Amérique N° 4.508.594), soit une fonction N-(méth)acryloylhémiacétalique (brevet des Etats-Unis d'Amérique N° 4.521.563), mais les monomères de la présente invention de formule générale I, possédant simultanément deux atomes de carbone vicinaux dont l'un est porteur d'une fonction acétalique et l'autre d'une fonction N-acylhémiacétalique, ne sont pas, à la connaissance de la Demanderesse, décrits dans la littérature.

Selon l'invention, les produits de formule (I) ci-dessus peuvent être préparés par un procédé caractérisé en ce que l'on fait réagir le (méth)acrylamide avec un dialkoxy-2,2 éthanal de formule (II) :

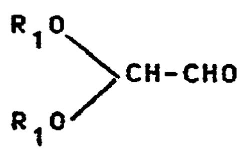

(II)

dans laquelle $R_1$ a la signification indiquée précédemment pour obtenir un produit de formule (I) correspondant dans laquelle $R_2$ représente un atome d'hydrogène et que, si désiré, l'on éthérifie en un produit de formule (I) correspondant dans laquelle $R_1$ et $R_2$, identiques ou différents, représentent un groupement alkyle en $C_1$-$C_8$.

Dans des conditions préférentielles de mise en oeuvre de l'invention, la condensation du (méth)acrylamide avec un dialkoxyéthanal de formule (II) est réalisée, sous atmosphère inerte et :

- à une température comprise entre 50 et 100°C, avantageusement à $70 \pm 5$°C ;
- avec un léger excès de l'un ou de l'autre des réactifs ;
- en présence d'une faible quantité d'un antioxydant tel que le paraméthoxyphénol.

Selon l'invention, l'éthérification des produits de formule (I) ci-dessus dans laquelle $R_2$ représente un atome d'hydrogène en des produits de formule (I) ci-dessus dans laquelle $R_2$ représente un groupement alkyle en $C_1$-$C_8$ est effectuée par un procédé caractérisé en ce que l'on fait réagir en présence de quantités catalytiques d'un acide, l'alkanol correspondant de formule (III) $R_3OH$ dans laquelle $R_3$ représente un groupement alkyle en $C_1$-$C_8$ avec un produit de formule (I) dans laquelle $R_2$ représente un atome d'hydrogène.

Dans des conditions préférentielles de mise en oeuvre de ce dernier procédé, on effectue l'éthérification à une température comprise entre 50°C et la tempé rature de reflux du milieu réactionnel en présence d'un excès d'alkanol de formule (III) et de quantités catalytiques d'un acide tel que le chlorure d'hydrogène, l'acide paratoluènesulfonique, l'acide sulfurique.

Les produits de formule (I) présentent d'intéressantes propriétés en chimie macromoléculaire. Ils peuvent notamment être utilisés comme monomères dans la préparation de divers polymères.

Les exemples suivants illustrent l'invention sans toutefois la limiter.

Les spectres de résonance magnétique nucléaire ont été établis dans le chloroforme deutéré. Les déplacements chimiques sont exprimés en ppm (parties par million) par rapport au tétraméthylsilane utilisé comme référence interne. Les spectres RMN[1]H ont été effectués sur un appareil VARIAN à 60 MHz et les spectres RMN[13]C sur un appareil VARIAN XL 100 à 25.2 MHz à transformée de FOURIER. Les spectres de masse ont été effectués sur un appareil VARIAN Mat CH5 à 70 eV.

Exemple 1

On chauffe deux heures à 70°C en atmosphère inerte :
- 23.8 mmoles de diéthoxy-2,2 éthanal,
- 24 mmoles d'acrylamide,
- 0,1 mmole de paraméthoxyphénol.

On obtient ainsi 23,3 mmoles de N(diéthoxy-2,2 hydroxy-1 éthyl) propène-2 amide brut dont le spectre RMN$^{13}$C est le suivant : 15,26 (2q, $2CH_3$) 63,53 (t, $CH_2$) : 63,96 (t, $CH_2$) ; 73,6 (d, N-CHO) ; 102 (d, O-CHO); 127,3 (m, $=CH_2$) ; 130,8 (m, =CH) ; 166 (s, N-CO).

Ce produit brut est dissous dans 1,38 g (30 mmoles) d'éthanol contenant 0,49 g d'acide sulfurique concentré par litre, puis la solution est chauffée en atmosphère inerte durant 4 heures à 70°C. Le milieu réactionnel refroidi est ensuite repris à l'eau et le produit cherché est extrait au dichlorométhane. Les phases organiques réunies sont ensuite lavées à l'eau, séchées, filtrées et évaporées sous vide.

On obtient ainsi 5,1 g (21,2 mmoles) de N-(triéthoxy-1,2,2 éthyl) propène-2 amide présentant un point de fusion de 33 ± 2°C, soit un rendement de 89 % de la théorie calculée par rapport à l'éthoxy-2,2 éthanal mis en oeuvre.

Analyses physiques

RMN$^1$H : 1,2 (m, 9H) ; 3,6 (m, 6H) ; 4,5 (d, 1H) ; 5,4 (d.d., 1H) ; 5,8 (d.d., 1H) ; 6,2 (m, 2H)

RMN$^{13}$C : 15,08 (q, $CH_3$) ; 15,18 (q, $CH_3$) ; 15,25 (q, $CH_3$) ; 63,36 (t, $CH_2$) ; 64,01 (2t, $CH_2$) ; 79,04 (d, O-CH-N) ; 101,71 (d, O-CHO) ; 127,2 (m, CH); 130,7 (m, =CH2) ; 165,9 (s, N-C=O).

Masse : M 231 (0 %) ; 186 (2 %) ; 161 (2 %) ; 141 (5 %) ; 139 (5 %) ; 128 (6 %) ; 103 (100 %) ; 75 (53%) ; 59 (25 %) ; 55 (20 %).

Exemple 2

On chauffe deux heures à 70°C en atmosphère inerte :
- 67 mmoles d'acrylamide,
- 69 mmoles de diméthoxy-2,2 éthanal,
- 0,14 mmole de paraméthoxyphénol.

On obtient ainsi 67 mmoles de N-(diméthoxy-2,2 hydroxy-1 éthyl) propène-2 amide brut.

On chauffe quatre heures à 70°C en atmosphère inerte :
- 67 mmoles de N-(diméthoxy-2,2 hydroxy-1 éthyl) propène-2 amide préparé précédemment dans :
- 84 mmoles de méthanol contenant 5 mmoles d'acide sulfurique concentré par litre.

Le milieu réactionnel est ensuite repris à l'eau et le produit cherché est extrait au dichlorométhane.

Les phases organiques réunies sont lavées à l'eau, séchées, filtrées et concentrées sous vide. On obtient ainsi 40 mmoles de N-(triméthoxy-1,2,2 éthyl) propène-2 amide.

Il va de soi que la présente invention n'a été décrite qu'à titre purement explicatif et nullement limitatif et que toute modification, notamment au niveau des équivalences, pourra y être apportée sans sortir de son cadre.

**Revendications**

1. Les produits de formule générale (I) :

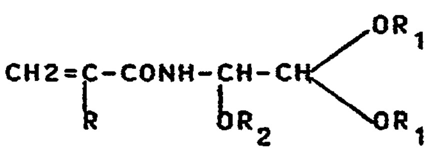

(I)

dans laquelle R représente un atome d'hydrogène ou un radical méthyle, $R_1$ représente un groupement alkyle en $C_1$-$C_8$ et $R_2$ représente un atome d'hydrogène ou un groupement alkyle en $C_1$-$C_8$.

2. Les produits tels que définis à la revendication 1, caractérisés en ce que dans la formule (I), R représente un atome d'hydrogène, $R_1$ représente un groupement alkyle en $C_1$-$C_4$ et $R_2$ représente un atome d'hydrogène ou un groupement alkyle en $C_1$-$C_4$.

3. Le N-(triméthoxy-1,2,2 éthyl) propène-2 amide.

4. Le N-(triéthoxy-1,2,2 éthyl) propène-2 amide.

5. Le N-(diméthoxy-2,2 hydroxy-1 éthyl) propène-2 amide.

6. Le N-(diéthoxy-2,2 hydroxy-1 éthyl) propène-2 amide.

7. Procédé de préparation des produits tels que définis par la formule (I) de la revendication 1, caractérisé en ce que l'on fait réagir le (méth)acrylamide avec un dialkoxy-2,2 éthanal de formule (II) :

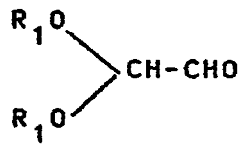

(II)

dans laquelle $R_1$ a la signification donnée à la revendication 1 pour obtenir un produit de formule (I) correspondant dans laquelle $R_2$ représente un atome d'hydrogène et que, si désiré, l'on éthérifie avec un alkanol en $C_1$-$C_8$ en un produit de formule (I) correspondant dans laquelle $R_1$ et $R_2$, identiques ou différents, représentent un groupement alkyle en $C_1$-$C_8$.

8. Procédé selon la revendication 7, caractérisé en ce que l'éthérification des produits de formule (I) dans laquelle $R_2$ représente un atome d'hydrogène est réalisée en présence de quantités catalytiques d'un acide avec un alkanol en $C_1$-$C_8$.

**Patentansprüche**

1. Produkte der allgemeinen Formel (I)

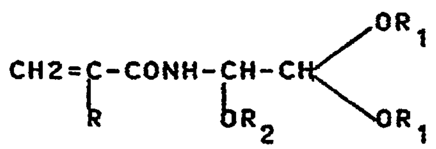

(I)

worin R ein Wasserstoffatom oder eine Methylgruppe bedeutet, $R_1$ eine $C_1$-$C_8$-Alkylgruppe darstellt und $R_2$ ein Wasserstoffatom oder eine $C_1$-$C_8$-Alkylgruppe ist.

2. Produkte, wie in Anspruch 1 definiert, dadurch gekennzeichnet, daß Formel (I) R ein Wasserstoffatom, $R_1$ eine $C_1$-$C_4$-Alkylgruppe und $R_2$ ein Wasserstoffatom oder eine $C_1$-$C_4$-Alkylgruppe bedeuten.

3. N-(1, 2, 2-Trimethoxyäthyl)-2-propenamid.

4. N-(1, 2, 2-Triäthoxyäthyl)-2-propenamid.

5. N-(2, 2-Dimethoxy-1-hydroxyäthyl)-2-propenamid.

6. N-(2, 2-Diäthoxy-1-hydroxyäthyl)-2-propenamid.

7. Verfahren zur Herstellung von Produkten, wie durch die Formel (I) von Anspruch 1 definiert, dadurch gekennzeichnet, daß man (Meth) Acrylamid mit einem 2, 2-Dialkoxyäthanal der Formel (II)

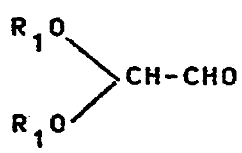

(II)

worin $R_1$ die in Anspruch 1 angegebene Bedeutung hat, umsetzt, wobei ein entsprechendes Produkt der Formel (I) erhalten wird, worin $R_2$ ein Wasserstoffatom bedeutet, und, wenn gewünscht, dieses mit einem $C_1$-$C_8$-Alkanol zu einem entsprechenden Produkt der Formel (I) veräthert, worin $R_1$ und $R_2$, die gleich oder verschiden sind, eine $C_1$-$C_8$-Alkylgruppe bedeuten.

8. Verfahren nach Anspruch 7, dadurch gekennzeichnet, daß die Verätherung der Produkte der Formel (I), worin $R_2$ ein Wasserstoffatom bedeutet, in Anwesenheit katalytischer Mengen einer Säure mit einem $C_1$-$C_8$-Alkanol durchgeführt wird.

**Claims**

1. Products having the general Fromula (I):

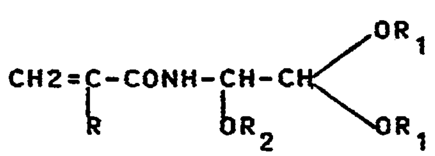

(I)

where R denotes a hydrogen atom or a methyl radical, $R_1$ denotes a $C_1$-$C_8$ alkyl group and $R_2$ denotes a hydrogen atom or a $C_1$-$C_8$ alkyl group.

2. Products as defined in claim 1, characterized in that in the Formula (I) R denotes a hydrogen atom, $R_1$ denotes a $C_1$-$C_4$ alkyl group and $R_2$ denotes a hydrogen atom or a $C_1$-$C_4$ alkyl group.

3. N-(1, 2, 2-trimethoxy ethyl) 2-propene amide.

4. N-(1, 2, 2-triethoxy ethyl) 2-propene amide.
5. N-(2, 2-dimethoxy-1-hydroxy ethyl) 2-propene amide.
6. N-(2, 2-diethoxy-1-hydroxy ethyl) 2-propene amide.
7. A process for the preparation of the products as defined by Formula (I) in claim 1, characterized in that (meth) acrylamide is reacted with a 2, 2-dialkoxy having the Formula (II):

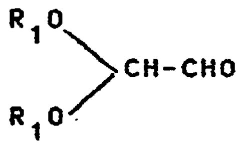

(II)

where $R_1$ has the meaning given in claim 1, to obtain a corresponding product of Formula (I), where $R_2$ denotes a hydrogen atom and which, of required, is etherified with a $C_1$-$C_8$ alkanol to form a corresponding product of formula (I), where $R_1$ and $R_2$, which are identical or different,denote a $C_1$-$C_8$ alkyl group.
8. A process according to claim 7, characterized in that the etherification of the products of Formula (I), where $R_2$ denotes a hydrogen atom, is performed in the presence of catalyticquantities of an acid with a $C_1$-$C_8$ alknol.